# EUROPEAN PATENT APPLICATION

(11) **EP 4 524 619 A1**
(43) Date of publication of application: **19.03.2025**
(21) Application number: 23803376.5
(22) Date of filing: 20.04.2023
(51) Int. Cl.: G02B 1/115, G02B 1/14, G02B 1/18

(54) **OPTICAL MULTILAYER BODY AND ARTICLE**

(30) Priority: 12.05.2022 JP 2022078796
(71) Applicant: Dexerials Corporation, Shimotsuke-shi, Tochigi 323-0194 (JP)
(72) Inventor: MORIYAMA, Hironobu, Shimotsuke-shi, Tochigi 323-0194 (JP); KOBAYASHI, Tomoaki, Shimotsuke-shi, Tochigi 323-0194 (JP); YUKISHITA, Kohei, Shimotsuke-shi, Tochigi 323-0194 (JP)
(74) Representative: Lavoix
(86) International application number: PCT/JP2023/015751
(87) International publication number: WO 2023/218894

(57) **Abstract**

Disclosed is an optical multilayer body, wherein a transparent substrate, a hard coat layer, an adhesion layer, an optical function layer, and an antifouling layer are stacked in that order, and wherein, when the optical multilayer body is subjected to a sliding test of 500 reciprocations at a load of 250 g using a sliding tool having a Shore D hardness of 40 and a diameter of 0.8 mm, an absolute value of a change amount Δb* in a b* value in an L*a*b* color system before and after sliding at a sliding portion is 1.9 or less.

## Description

### TECHNICAL FIELD

The present invention relates to an optical multilayer body and an article. Priority is claimed on Japanese Patent Application No. 2022-078796, filed May 12, 2022, the content of which is incorporated herein by reference.

### BACKGROUND ART

For example, an optical multilayer body for antireflection may be provided on the surface of a flat panel display (FPD), a touch panel, a solar cell, or the like. Since an image is viewed through an optical multilayer body, it is required that the optical multilayer body does not adversely affect visibility. In addition, as various operating devices are made in a touch panel type, the optical multilayer body is also required to have improved scratch resistance.

For example, Patent Document 1 describes that color unevenness on a display can be reduced by making a difference between an a* value and a b* value in a CIE-Lab color system 2 or more.

For example, Patent Document 2 describes that pen sliding resistance can be improved by optimizing the composition of a low refractive index layer that is the outermost layer.

For example, Patent Document 3 describes an article having an antireflective coating that makes surface defects caused by scratches and fingerprints less noticeable.

For example, Patent Document 4 describes an article that has a scratch resistant layer and excellent durability and scratch resistance.

### Citation List

### Patent Document

Patent Document 1
   Japanese Unexamined Patent Application, First Publication No. 2019-28364
Patent Document 2
   Japanese Unexamined Patent Application, First Publication No. 2004-86196
Patent Document 3
   Japanese Unexamined Patent Application, First Publication No. 2020-126278
Patent Document 4
   Japanese Patent No. 6761348

### SUMMARY OF INVENTION

### Technical Problem

In the case of a touch panel in a pen touch type, a pen slides over the surface of the optical multilayer body. Sliding traces after the pen has slid may reduce the visibility of the touch panel.

The present disclosure has been made in consideration of the above problems, and an object of the present disclosure is to provide an optical multilayer body and an article in which a color change before and after sliding is less likely to be noticeable with the eyes.

### Solution to Problem

In order to solve the above problems, the present disclosure provides the following means.

(1) In an optical multilayer body according to a first aspect, a transparent substrate, a hard coat layer, an adhesion layer, an optical function layer, and an antifouling layer are stacked in that order. When the optical multilayer body is subjected to a sliding test of 500 reciprocations at a load of 250 g using a sliding tool having a Shore D hardness of 40 and a diameter of 0.8 mm, an absolute value of a change amount Δb* value in a b* value in an L*a*b* color system before and after sliding at a sliding portion is 1.9 or less.
(2) In the optical multilayer body according to the above aspect, the optical function layer may include a first high refractive index layer, a first low refractive index layer, a second high refractive index layer, and a second low refractive index layer in order from a side closer to the adhesion layer. The first high refractive index layer and the second high refractive index layer have higher refractive indices than the first low refractive index layer and the second low refractive index layer, respectively. A physical film thickness of the first high refractive index layer is 10 nm or more and 20 nm or less, a physical film thickness of the first low refractive index layer is 2 nm or more and 15 nm or less, and a physical film thickness of the second low refractive index layer is 70 nm or more and 85 nm or less.
(3) In the optical multilayer body according to the above aspect, the optical function layer may include a first high refractive index layer, a first low refractive index layer, a second high refractive index layer, and a second low refractive index layer in order from a side closer to the adhesion layer. The first high refractive index layer and the second high refractive index layer have higher refractive indices than the first low refractive index layer and the second low refractive index layer, respectively. An optical film thickness of the first high refractive index layer is 20 nm or more and 48.8 nm or less, an optical film thickness of the first low refractive index layer is 2.9 nm or more and 21.9 nm or less, and an optical film thickness of the second low refractive index layer is 102 nm or more and 124.1 nm or less.
(4) In the optical multilayer body according to the above aspect, a total physical film thickness of the optical function layer may be 170 nm or more and 220 nm or less.
(5) In the optical multilayer body according to the above aspect, a total optical film thickness of the optical function layer may be 320 nm or more and 410 nm or less.
(6) In the optical multilayer body according to the above aspect, a physical film thickness of the antifouling layer may be 2 nm or more and 10 nm or less.
(7) In the optical multilayer body according to the above aspect, the optical function layer may be a sputtered film.
(8) In the optical multilayer body according to the above aspect, the antifouling layer may be a vapor-deposited film.
(9) In the optical multilayer body according to above aspect, the antifouling layer may contain a fluorine compound.
(10) An article according to a second aspect includes the optical multilayer body according to the above aspect.

### Advantageous Effects of Invention

In the optical multilayer body and the article according to the above aspect, a color change before and after sliding is less likely to be noticeable with the eyes.

### BRIEF DESCRIPTION OF DRAWINGS

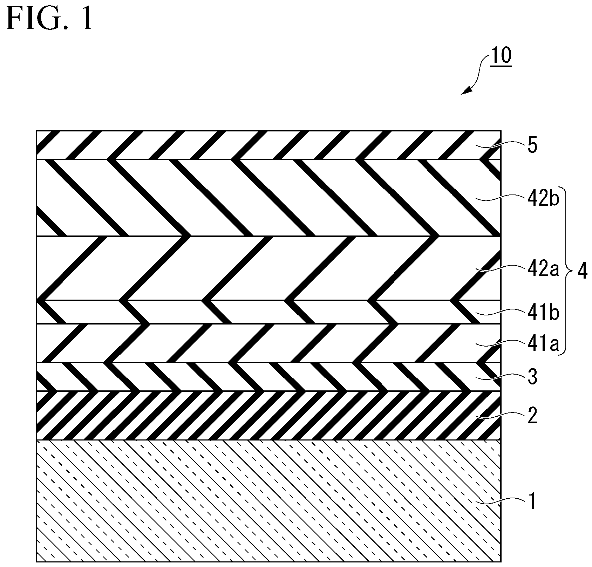

[FIG. 1] A cross-sectional view of an example of an optical multilayer body according to a first embodiment.

### DESCRIPTION OF EMBODIMENTS

Hereinafter, the present embodiment will be described in detail with appropriate reference to the drawing. In the drawing used in the following description, characteristic portions may be enlarged for convenience to make it easier to understand the characteristics, and the dimensional ratios of each component may differ from the actual ones. Materials, dimensions, and the like exemplified in the following description are examples, and the present disclosure is not limited to them and can be implemented with appropriate modifications within a scope in which the effects of the present disclosure are still exhibited.

### "Optical multilayer body"

When an optical multilayer body 10 according to the present embodiment is subjected to a sliding test of 500 reciprocations at a load of 250 g using a sliding tool having a Shore D hardness of 40 and a diameter of 0.8 mm, an absolute value of the change amount Δb* in a b* value in an L*a*b* color system before and after sliding at a sliding portion is 1.9 or less.

The sliding test is performed according to the following procedure. First, the optical multilayer body 10 is attached to a glass sheet having a thickness of 1 mm using a transparent adhesive sheet (manufactured by Lintec Corporation) such that an antifouling layer 5 of the optical multilayer body 10 is on a surface. Then, a linear sliding test is performed using a polyacetal pen (having a tip shape of 0.8 mmϕ and a Shore D hardness of 40) and a sliding tester (manufactured by Imoto Manufacturing Co., Ltd.). The load is 250 gf, the number of sliding cycles is 1000 (500 reciprocations), the reciprocation distance is 50 mm, and the speed of reciprocation is two sliding cycles (one reciprocation) per second.

In the L*a*b* color system, L* represents brightness, and the a* value and the b* value indicate chromaticity. If absolute values of the a* value and the b* value of a color at the coordinates are large, the saturation of the color is large. That is, if the absolute values of the a* value and the b* value of a color at the coordinates are large, the vividness of the color is high, and if the absolute values of the a* value and the b* value of a color at the coordinates are small, the color is close to an achromatic color. The color at the coordinates of +a* is a hue on a red side, the color at the coordinates of -a* is a hue on a green side, the color at the coordinates of +b* is a hue on a yellow side, and the color at the coordinates of -b* is a hue on a blue side. Color measurement is performed using light having a wavelength of 380 nm or more and 780 nm or less from a standard light source D65. In measuring the L* value, the a* value, and the b* value before and after sliding, the incidence angle of the light to the measurement surface was set to 0°.

In the optical multilayer body 10 in which the absolute value of the change amount Δb* in the b* value in the L*a*b* color system before and after sliding is 1.9 or less, the sliding traces are less likely to be noticeable after the pen sliding test. As described above, parameters representing the chromaticity are the a* value and the b* value, but it is the b* value that has a greater effect on visibility before and after sliding. The smaller the change width of the absolute value of the change amount Δb* in the b* value, the smaller the effect on the visibility. The absolute value of the change amount Δb* in the b* value is preferably 1.7 or less and more preferably 1.3 or less.

An absolute value of the change amount Δa* in the a* value in the L*a*b* color system before and after sliding is preferably 3.8 or less, more preferably 2.8 or less, and further preferably 2.4 or less. The smaller the change amount Δa*, the less likely the deterioration of the visibility due to sliding is to occur. The change amount Δa* in the a* value before and after sliding has a smaller effect on the visibility than the absolute value of the change amount Δb* in the b* value.

In addition, a color difference ΔE*ab of the optical multilayer body 10 before and after sliding is, for example, 3.4 or less, preferably 3.2 or less, more preferably 2.9 or less, and further preferably 2.8 or less. The color difference ΔE*ab before and after sliding is expressed as ΔE*ab = (ΔL*² + Δa*² + Δb*²)^{1/2}. Here, ΔL* is the change amount ΔL* in the brightness before and after sliding, Δa* is the change amount in the a* value before and after sliding, and Δb* is the change amount in the b* value before and after sliding.

In addition, in the optical multilayer body 10 according to the present embodiment, the absolute value of the change amount Δb* between the b* value in the L*a*b* color system of the reflection light when the light is incident at an incidence angle of 5° and the b* value in the L*a*b* color system of the reflection light when the light is incident at an incidence angle of 45° is preferably 6.0 or less. Color measurement is performed using light having a wavelength of 380 nm or more and 780 nm or less from a standard light source D65.

As described above, the color at the coordinates of +a* is a hue on a red side, the color at the coordinates of -a* is a hue on a green side, the color at the coordinates of +b* is a hue on a yellow side, and the color at the coordinates of -b* is a hue on a blue side. On the other hand, the center of the wavelength of visible light, which has a large effect on visual sensitivity, is near 565 nm, which is at the coordinates of -a* and +b* in the L*a*b* color system and is a hue in the coordinate range that includes the yellow side and the green side. In the optical multilayer body of the present embodiment, in order to suppress a change in visible hue (the occurrence of color unevenness) due to a change in incidence angle of the light on the optical multilayer body, a change in hue on a coordinate side that includes the easily visible yellow and green sides is suppressed, and thus the color unevenness is less likely to be noticeable.

The optical multilayer body according to the present embodiment satisfies the requirement that the absolute value of the change amount Δb* between the b* value in the L*a*b* color system of the reflection light when the light is incident at an incidence angle of 5° and the b* value in the L*a*b* color system of the reflection light when the light is incident at an incidence angle of 45° is 6.0 or less.

In addition, in the optical multilayer body according to the present embodiment, the b* value in the L*a*b* color system of the reflection light when the light is incident at an incidence angle of 5° and the b* value in the L*a*b* color system of the reflection light when the light is incident at an incidence angle of 45° each preferably satisfy -20 ≤ b* ≤ 10, and more preferably satisfy -20 ≤ b* ≤ 0.

Further, in the optical multilayer body according to the present embodiment, the a* value in the L*a*b* color system of the reflection light when the light is incident at an incidence angle of 5° and the a* value in the L*a*b* color system of the reflection light when the light is incident at an incidence angle of 45° each preferably satisfy -10 ≤ a* ≤ 20, and more preferably satisfy -3 ≤ a* ≤ 6.

Furthermore, the optical multilayer body according to the present embodiment preferably satisfies the requirement that the absolute value of the change amount Δa* between the a* value in the L*a*b* color system of the reflection light when the light is incident at an incidence angle of 5° and the a* value in the L*a*b* color system of the reflection light when the light is incident at an incidence angle of 45° is 10 or less. If this condition is satisfied, color unevenness caused by changing the viewing angle can be made less likely to be noticeable. In this case, it is preferable that a difference obtained by subtracting the a* value at an incidence angle of 5° from the a* value at an incidence angle of 45° be positive.

The b* value has a large effect on the visual sensitivity and is likely to affect the hue of an article. If the change amount Δb* in the b* value associated with a difference in the viewing angle is small, the change in the hue caused by the change in the viewing angle can be made less likely to be noticeable, and the color unevenness can be made less likely to be noticeable.

When the b* value satisfies -15 ≤ b* < 10, and preferably -15 ≤ b* ≤ 0, the change in the a* value can be made less likely to be noticeable. In particular, when the b* value satisfies b ≤ 0, the change in the a* value can be made less likely to be noticeable.

When the a* value satisfies -10 ≤ a* ≤ 20, and preferably -3 ≤ a* ≤ 6, it is possible to avoid affecting the color on the green side, where color unevenness is more easily noticeable.

When the change amount Δa* in the a* value is small in addition to the change amount Δb* in the b* value, color unevenness caused by the change in the viewing angle can be made even less likely to be noticeable.

In addition, a color difference ΔE*ab associated with a difference in the incidence angle of the light in the optical multilayer body 10 is, for example, 19.4 or less, preferably 15.2 or less, more preferably 13.6 or less, and further preferably 10 or less. The color difference ΔE*ab associated with a differences in the incidence angle of the light can be obtained from the L*a*b* value of the reflection light when light is incident at an incidence angle of 5° and the L*a*b* value of the reflection light when the light is incident at an incidence angle of 45°, as ΔE*ab = (ΔL*² + Δa*² + Δb^{*2})^{1/2}. Here, ΔL* is the change amount ΔL* in the brightness due to a difference in the incidence angle of the light, Δa* is the change amount in the a* value due to a differences in the incidence angle of the light, and Δb* is the change amount in the b* value due to a difference in the incidence angle of the light.

FIG. 1 is a cross-sectional view of an example of the optical multilayer body 10 according to a first embodiment. The optical multilayer body 10 includes a transparent substrate 1, a hard coat layer 2, an adhesion layer 3, an optical function layer 4, and an antifouling layer 5 stacked in that order.

### (Transparent substrate)

The transparent substrate 1 is made of a transparent material that can transmit light in a visible light range. The transparent substrate 1 is, for example, a plastic film. Examples of a constituent material of the plastic film include a polyester-based resin, an acetate-based resin, a polyether sulfone-based resin, a polycarbonate-based resin, a polyamide-based resin, a polyimide-based resin, a polyolefin-based resin, a (meth)acrylic-based resin, a polyvinyl chloride-based resin, a polyvinylidene chloride based resin, a polystyrene-based resin, a polyvinyl alcohol-based resin, a polyarylate-based resin, and a polyphenylene sulfide-based resin. The transparent substrate 1 is an inorganic substrate and may be a glass film.

The constituent material of the transparent substrate 1 is preferably a polyester-based resin, an acetate-based resin, a polycarbonate-based resin, or a polyolefin-based resin. The transparent substrate 1 is preferably, for example, a polyethylene terephthalate (PET) substrate or a triacetyl cellulose (TAC) substrate.

In the present invention, the term "transparent material" refers to a material having a transmittance of 80% or more for light in a wavelength range used within the scope that does not impair the effect of the present invention. In addition, in the present embodiment, "(meth)acrylic" means methacryl and acrylic.

The transparent substrate 1 may contain a reinforcing material as long as the optical properties are not significantly impaired. Examples of the reinforcing material include cellulose nanofiber, nanosilica, and the like.

The transparent substrate 1 may be a film provided with an optical function and/or a physical function. Examples of the film having an optical function and/or a physical function include a polarizing plate, a phase difference compensation film, a heat ray blocking film, a transparent conductive film, a brightness enhancement film, a barrier property-improving film, a lens sheet, and the like. In addition, these films may be provided with an antistatic function.

The thickness of the transparent substrate 1 is not particularly limited, and is, for example, 25 µm or more, and preferably 40 µm or more. The thickness of the transparent substrate 1 is a physical film thickness. When the thickness of the transparent substrate 1 is 25 µm or more, the rigidity of the substrate itself is ensured, and wrinkles are less likely to occur even when stress is applied to the optical multilayer body 10. In addition, when the thickness of the transparent substrate 1 is 25 µm or more, wrinkles are less likely to occur even when the hard coat layers 2 are continuously formed on the transparent substrate 1, and thus there are few concerns in production. When the thickness of the transparent substrate 1 is 25 µm or more, the optical multilayer body 10 is less likely to curl during production and is easy to handle.

The thickness of the transparent substrate 1 is preferably 1 mm or less, more preferably 500 µm or less, and particularly preferably 300 µm or less. When the thickness of the transparent substrate 1 is 1 mm or less, the substantial optical transparency of the transparent substrate 1 can be ensured. In addition, when the thickness of the transparent substrate 1 is 1 mm or less, a film can be formed on the transparent substrate 1 by either a sheet-feed method or a roll-to-roll method. In particular, when the thickness of the transparent substrate 1 is 300 µm or less, in a case in which the optical multilayer body 10 is produced by a roll-to-roll method, it is possible to increase the length of the transparent substrate 1 wound in a roll shape which can be input at one time. For this reason, when the thickness of the transparent substrate 1 is 300 µm or less, in a case in which the optical multilayer body 10 is continuously produced by a roll-to-roll method, the productivity is excellent. In addition, when the thickness of the transparent substrate 1 is 300 µm or less, the optical multilayer body 10 with good quality is obtained, and thus this case is preferable.

The surface of the transparent substrate 1 may be subjected in advance to etching treatment and/or undercoating treatment such as sputtering, corona discharge, ultraviolet irradiation, electron beam irradiation, chemical conversion, or oxidation. By performing these treatments in advance, the adhesion of the hard coat layer 2 formed on the transparent substrate 1 is improved. Furthermore, before forming the hard coat layer 2 on the transparent substrate 1, the surface of the transparent substrate 1 may be subjected to solvent cleaning, ultrasonic cleaning, or the like to remove dust from the surface of the transparent substrate 1 and to clean the surface, if necessary.

### (Hard coat layer)

The hard coat layer 2 is not particularly limited, and any known hard coat layer can be used. The hard coat layer 2 may contain, for example, a binder resin and a filler. The hard coat layer 2 may contain a leveling agent in addition to these.

As the binder resin, a resin having transparency is preferable, and examples thereof include an ionizing radiation-curable resin that is cured with ultraviolet rays or electron beams, a thermoplastic resin, a thermosetting resin, and the like.

Examples of the ionizing radiation-curable resin that is the binder resin include ethyl (meth)acrylate, ethylhexyl (meth)acrylate, styrene, methylstyrene, N-vinylpyrrolidone, and the like. In addition, the ionizing radiation-curable resin may be a compound having two or more unsaturated bonds. Examples of the ionizing radiation-curable resin having two or more unsaturated bonds include a polyfunctional compound and the like such as trimethylolpropane tri(meth)acrylate, tripropylene glycol di(meth)acrylate, diethylene glycol di(meth)acrylate, dipropylene glycol di(meth)acrylate, pentaerythritol tri(meth)acrylate, pentaerythritol tetra(meth)acrylate, dipentaerythritol hexa(meth)acrylate, 1,6-hexanediol di(meth)acrylate, neopentyl glycol di(meth)acrylate, trimethylolpropane tri(meth)acrylate, ditrimethylolpropane tetra(meth)acrylate, dipentaerythritol penta(meth)acrylate, tripentaerythritol octa(meth)acrylate, tetrapentaerythritol deca(meth)acrylate, isocyanuric acid tri(meth)acrylate, isocyanuric acid di(meth)acrylate, polyester tri(meth)acrylate, polyester di(meth)acrylate, bisphenol di(meth)acrylate, diglycerin tetra(meth)acrylate, adamantyl di(meth)acrylate, isobornyl di(meth)acrylate, dicyclopentane di(meth)acrylate, tricyclodecane di(meth)acrylate, and ditrimethylolpropane tetra(meth)acrylate. Among them, pentaerythritol triacrylate (PETA), dipentaerythritol hexaacrylate (DPHA), or pentaerythritol tetraacrylate (PETTA) is preferably used as the binder resin. In addition, "(meth)acrylate" refers to methacrylate and acrylate. In addition, as the ionizing radiation-curable resin, one obtained by modifying the above-mentioned compound with propylene oxide (PO), ethylene oxide (EO), caprolactone (CL), or the like may be used. The ionizing radiation-curable resin is preferably an acrylic ultraviolet curable resin composition.

In addition, examples of the thermoplastic resin that is the binder resin include a styrene-based resin, a (meth)acrylic-based resin, a vinyl acetate-based resin, a vinyl ether-based resin, a halogen-containing resin, an alicyclic olefin-based resin, a polycarbonate-based resin, a polyester-based resin, a polyamide-based resin, a cellulose derivative, a silicone-based resin, a rubber, elastomer, and the like. The thermoplastic resin is amorphous and soluble in an organic solvent (in particular, a common solvent capable of dissolving a plurality of polymers or curable compounds). In particular, from the viewpoint of transparency and weather resistance, the binder resin is preferably a styrene-based resin, a (meth)acrylic-based resin, an alicyclic olefin-based resin, a polyester-based resin, a cellulose derivative (cellulose esters or the like), or the like.

Examples of the thermosetting resin that is the binder resin may include a phenol resin, a urea resin, a diallyl phthalate resin, a melamine resin, a guanamine resin, an unsaturated polyester resin, a polyurethane resin, an epoxy resin, an aminoalkyd resin, a melamine-urea co-condensation resin, a silicon resin, a polysiloxane resin (including so-called silsesquioxane and the like in the form of cages, ladders, or the like), and the like.

The hard coat layer 2 may contain an organic resin and an inorganic material, or may be an organic-inorganic hybrid material. Examples of the hard coat layer include a hard coat layer formed by a sol-gel method. Examples of the inorganic material include silica, alumina, zirconia, and titania. Examples of the organic material include an acrylic resin.

The filler may be made of an organic substance, an inorganic substance, or a mixture of the organic substance and the inorganic substance. A filler contained in the hard coat layer 2 can be selected from various fillers depending on the application of the optical multilayer body 10 from the viewpoints of an antiglare property, adhesion with the optical function layer 4, which will be described below, an antiblocking property, and the like. Specifically, as the filler, for example, known particles such as silica (an oxide of Si) particles, alumina (aluminum oxide) particles, and organic fine particles can be used.

In a case in which the filler includes silica particles and/or alumina particles, the average particle size of the particles in the filler is, for example, 800 nm or less, preferably 100 nm or less, and more preferably 40 nm or more and 70 nm or less. In a case in which the filler includes organic fine particles, the average particle size of the organic fine particles is, for example, 10 µm or less, preferably 5 µm or less, and more preferably 3 µm or less.

The thickness of the hard coat layer 2 is preferably 0.5 µm or more and more preferably 1 µm or more, for example. The thickness of the hard coat layer 2 is preferably 100 µm or less. The thickness of the hard coat layer 2 is a physical film thickness. The hard coat layer 2 may be constituted by a single layer, or may be one obtained by stacking a plurality of layers.

### (Adhesion layer)

The adhesion layer 3 is located between the hard coat layer 2 and the optical function layer 4. The adhesion layer 3 improves adhesion between the hard coat layer 2 and the optical function layer 4.

The adhesion layer 3 is made of one or more selected from metals such as silicon, nickel, chromium, tin, gold, silver, platinum, zinc, titanium, tungsten, aluminum, zirconium, palladium, and indium; alloys of these metals; and oxides, fluorides, sulfides, or nitrides of these metals.

The adhesion layer 3 may contain an inorganic oxide having a non-stoichiometric composition. The adhesion layer 3 may be, for example, a metal oxide in an oxygen-deficient state, and may be, for example, a layer containing SiOₓ (a Si oxide) as a main component. The adhesion layer 3 may be made only of a Si oxide, or may contain another element in a range of 50% by mass or less and preferably in a range of 10% by mass or less, in addition to the Si oxide. The adhesion layer 3 may contain Na, as another element, to improve the durability of the adhesion layer 3, or may contain one or more elements selected from Zr, Al, and N, as other elements, to improve the hardness of the adhesion layer 3.

The thickness of the adhesion layer 3 is preferably 1 nm or more and 10 nm or less and more preferably 1 nm or more and 5 nm or less, for example. The thickness of the adhesion layer 3 is a physical film thickness. When the thickness of the adhesion layer 3 is within the above range, the adhesion between the optical function layer 4 and the hard coat layer 2 is improved.

### (Optical Function Layer)

The optical function layer 4 is a layer that exhibits an optical function. The optical function is a function of controlling reflection, transmission, and refraction, which are the properties of light, and examples of the optical function include an antireflection function, a selective reflection function, an anti-glare function, a lens function, and the like.

The optical function layer 4 is, for example, a stacked film in which high refractive index layers and low refractive index layers are alternately stacked in that order from a side of the adhesion layer 3. The high refractive index layer has a higher refractive index than the low refractive index layer. The refractive indices of the high refractive index layers may be the same or different. The refractive indices of the low refractive index layers may be the same or different.

The total number of low refractive index layers and high refractive index layers stacked in the optical function layer 4 is not particularly limited. For example, as shown in FIG. 1, the number of layers stacked in the optical function layer 4 may be four, three or less, or five or more. The total number of low refractive index layers and high refractive index layers in the optical function layer 4 is preferably four or more and ten or less, more preferably four or more and six or less, and most preferably four. In a case in which the number of layers stacked in the optical function layer 4 is four, the number of layers stacked is small and the thickness thereof is thin, and thus productivity is excellent compared to a case in which the number of layers stacked is five or more. In addition, in a case in which the number of layers stacked in the optical function layer 4 is four, the antireflection properties are higher and the hue of the reflection light can be made closer to a neutral color (an achromatic color) than in a case in which the number of layers stacked is three or less.

The optical function layer 4 exhibits an antireflection function by the interference of pieces of reflection light reflected at interfaces of a multilayer body in which the high refractive index layers and the low refractive index layers are alternately stacked, and by the diffusion of the light incident from a side of the antifouling layer 5.

Hereinafter, a case in which the optical function layer 4 is a multilayer body including, in order from the side closest to the adhesion layer 3, a first high refractive index layer 41a, a first low refractive index layer 41b, a second high refractive index layer 42a, and a second low refractive index layer 42b will be described as an example. The first high refractive index layer 41a and the second high refractive index layer 42a have higher refractive indices than the first low refractive index layer 41b and the second low refractive index layer 42b, respectively.

The refractive indices of the first high refractive index layer 41a and the second high refractive index layer 42a are, for example, 2.00 or more and 2.60 or less and preferably 2.10 or more and 2.45 or less. The refractive indices of the first high refractive index layer 41a and the second high refractive index layer 42a may be the same or different.

Examples of a material of each of the first high refractive index layer 41a and the second high refractive index layer 42a include niobium pentoxide (Nb₂O₅, a refractive index 2.33), titanium oxide (TiO₂, a refractive index 2.33 to 2.55), tungsten oxide (WO₃, a refractive index 2.2), cerium oxide (CeO₂, a refractive index 2.2), tantalum pentoxide (Ta₂O₅, a refractive index 2.16), zinc oxide (ZnO, a refractive index 2.1), indium tin oxide (ITO, a refractive index 2.06), zirconium oxide (ZrO₂, a refractive index 2.2), and the like. The first high refractive index layer 41a and the second high refractive index layer 42a are preferably made of niobium pentoxide. The materials constituting the first high refractive index layer 41a and the second high refractive index layer 42a may be the same or different.

The refractive indices of the first low refractive index layer 41b and the second low refractive index layer 42b are, for example, 1.20 or more and 1.60 or less and preferably 1.30 or more and 1.50 or less. The refractive indies of the first low refractive index layer 41b and the second low refractive index layer 42b may be the same or different.

The first low refractive index layer 41b and the second low refractive index layer 42b contain, for example, an oxide of Si. The first low refractive index layer 41b and the second low refractive index layer 42b are layers containing, for example, SiO₂ (an oxide of Si) as a main component. The oxide of Si can be easily obtained and has an advantage in terms of cost. A SiO₂ single layer film is colorless and transparent. In the present embodiment, the main component is a component that accounts for 50% by mass or more of the components contained in the layer. The refractive indies of the first low refractive index layer 41b and the second low refractive index layer 42b may be the same or different.

In a case in which the first low refractive index layer 41b and the second low refractive index layer 42b contain an oxide of Si as a main component, the first low refractive index layer 41b and the second low refractive index layer 42b may contain another element in a range of less than 50% by mass. The content of another element other than the oxide of Si is preferably 10% or less. Examples of another element include Na, Zr, Al, and N. Na increases the durability of the first low refractive index layer 41b and the second low refractive index layer 42b. Zr, Al, and N increase the hardness and alkali resistance of the first low refractive index layer 41b and the second low refractive index layer 42b.

The physical film thickness of the first high refractive index layer 41a is, for example, 10 nm or more and 20 nm or less. The physical film thickness of the first high refractive index layer 41a is preferably 10 nm or more and 17 nm or less. The optical film thickness of the first high refractive index layer 41a is, for example, 20 nm or more and 48.8 nm or less. The optical film thickness of the first high refractive index layer 41a is preferably 23.8 nm or more and 44.3 nm or less. The optical film thickness has a value obtained by multiplying the physical film thickness by the refractive index of the layer.

The physical film thickness of the first low refractive index layer 41b is, for example, 2 nm or more and 15 nm or less. The physical film thickness of the first low refractive index layer 41b is preferably 4 nm or more and 9 nm or less and more preferably 7 nm or more and 9 nm or less. The optical film thickness of the first low refractive index layer 41b is, for example, 2.9 nm or more and 21.9 nm or less. The optical film thickness of the first low refractive index layer 41b is preferably 5.8 nm or more and 13.7 nm or less and more preferably 10.22 nm or more and 13.72 nm or less.

The physical film thickness of the second high refractive index layer 42a is, for example, 30 nm or more and 110 nm or less. The physical film thickness of the second high refractive index layer 42a is preferably 74 nm or more and 102 nm or less. The optical film thickness of the second high refractive index layer 42a is, for example, 60 nm or more and 277.2 nm or less. The optical film thickness of the second high refractive index layer 42a is preferably 172.4 nm or more and 226.8 nm or less and more preferably 172.4 nm or more and 217.9 nm or less.

The physical film thickness of the second low refractive index layer 42b is, for example, 70 nm or more and 85 nm or less. The physical film thickness of the second low refractive index layer 42b is preferably 73 nm or more and 81 nm or less. The optical film thickness of the second low refractive index layer 42b is, for example, 102 nm or more and 124.1 nm or less. The optical film thickness of the second low refractive index layer 42b is preferably 106.6 nm or more and 118.3 nm or less.

By setting the film thickness of each of the first high refractive index layer 41a, the first low refractive index layer 41b, the second high refractive index layer 42a, and the second low refractive index layer 42b within a specified range, it is possible to realize the optical multilayer body 10 in which the b* value in the L*a*b* color system of reflection light from the surface is less likely to fluctuate in the sliding test. At this time, the film thickness of the first low refractive index layer 41b is the smallest among the layers in the optical function layer 4.

The total physical film thickness of the optical function layer 4 is, for example, 170 nm or more and 220 nm or less, preferably 180 nm or more and 210 nm or less, and more preferably 189 nm or more and 198 nm or less. The total optical film thickness of the optical function layer 4 is, for example, 320 nm or more and 410 nm or less, preferably 341.4 nm or more and 399.0 nm or less, and more preferably 362.8 nm or more and 386.8 nm or less. By setting the total thickness of the optical function layer 4 within a predetermined range, the hue of the reflection light can be made closer to neutral. In addition, since the total thickness of the optical function layer 4 is within a predetermined range, the optical multilayer body 10 can be produced efficiently.

Each layer of the optical function layer 4 is, for example, a sputtered film. The sputtered film is denser than a film formed by using a general vacuum vapor deposition method or coating method. For example, the water vapor permeability of the optical function layer 4 of the sputtered film is 1.0 g/m²/day or less. The dense sputtered film has a low water vapor permeability. The sputtered film is dense, and thus the sliding traces are less likely to be left on the sputtered film. For example, even in a case in which a part of the antifouling layer 5 is peeled off due to sliding with a pen, the optical function layer 4 is dense, and thus the traces of the sliding with a pen are less likely to be left on the optical function layer 4.

Among the layers that form the optical function layer 4, for example, the low refractive index layer 4b is disposed on a side of the antifouling layer 5. In a case in which the low refractive index layer 4b of the optical function layer 4 is in contact with the antifouling layer 5, the antireflection performance of the optical function layer 4 is improved.

### (Antifouling layer)

The antifouling layer 5 is on a surface of the optical function layer 4 opposite to a surface of the optical function layer 4 in contact with the adhesion layer 3. The antifouling layer 5 is on the outermost surface of the optical function layer 4. The antifouling layer 5 prevents the optical function layer 4 from being fouled or damaged. In addition, the antifouling layer 5 suppresses wear of the optical function layer 4 due to the sliding of a pen when the antifouling layer 5 is applied to a touch panel or the like.

The antifouling layer 5 is, for example, a vapor-deposited film formed by vapor-depositing an antifouling material. The antifouling layer 5 is formed, for example, by vacuum vapor-depositing a fluorine-based compound as an antifouling material on one surface of the second low refractive index layer 42b constituting the optical function layer 4. When the antifouling layer 5 contains a fluorine-based compound, the sliding during input with a pen becomes smoother, and the pen sliding resistance of the optical multilayer body 10 is further improved.

The fluorine-based compound contained in the antifouling layer 5 is, for example, a fluorine-based organic compound. The fluorine-based organic compound is, for example, a compound including a fluorine-modified organic group and a reactive silyl group (for example, alkoxysilane). Examples of a commercially available product that can be used for the antifouling layer 5 include Optool DSX (manufactured by Daikin Co., Ltd.) and KY-100 series (manufactured by Shin-Etsu Chemical Co., Ltd.).

In a case in which the compound including a fluorine-modified organic group and a reactive silyl group (for example, alkoxysilane) is used for the antifouling layer 5 and SiO₂ is used for the second low refractive index layer 42b of the optical function layer 4, a siloxane bond is formed between a silanol group, which is the skeleton of the fluorine-based organic compound, and SiO₂. The siloxane bond enhances the adhesion between the optical function layer 4 and the antifouling layer 5.

The thickness of the antifouling layer 5 is, for example, 1 nm or more and 20 nm or less and preferably 3 nm or more and 10 nm or less. The thickness of the antifouling layer is a physical film thickness. When the antifouling layer 5 has a thickness of 1 nm or more, sufficient abrasion resistance can be ensured when the optical multilayer body 10 is used for a touch panel or the like. In addition, when the thickness of the antifouling layer 5 is 20 nm or less, the time required for the vapor deposition is short, and the layer can be produced efficiently.

The antifouling layer 5 may contain additives such as a light stabilizer, an ultraviolet absorber, a coloring agent, an antistatic agent, a lubricant, a leveling agent, an antifoaming agent, an antioxidant, a flame retardant, an infrared absorber, and a surfactant, if necessary.

The antifouling layer 5 formed through the vapor deposition is firmly bonded to the optical function layer 4, has few voids, and is dense. For this reason, the antifouling layer 5 formed through the vapor deposition exhibits characteristics different from those of the antifouling layer 5 formed by another method such as application of an antifouling material. The antifouling layer 5 formed through the vapor deposition is less likely to be abraded.

Next, a method for producing the optical multilayer body according to the present embodiment will be described. First, the transparent substrate 1 is prepared. The transparent substrate can be obtained, for example, by purchasing a commercial available product.

Next, the hard coat layer 2 is formed on one surface of the transparent substrate 1. A slurry containing a material that will become the hard coat layer 2 is applied onto the transparent substrate 1, and the material that will become the hard coat layer 2 is cured by a known method, and thus the hard coat layer 2 is obtained. Before forming the hard coat layer 2 on the transparent substrate 1, the surface may be cleaned as necessary. Examples of a method for cleaning the surface of the transparent substrate 1 include solvent cleaning, ultrasonic cleaning, and the like. It is preferable to wash the transparent substrate 1 in order to remove dust from the surface of the transparent substrate 1 and to clean the surface. In addition, the transparent substrate 1 having the hard coat layer 2 formed thereon may be purchased from a commercial source.

Next, the adhesion layer 3 is formed on the hard coat layer 2. The method for producing the adhesion layer 3 is not particularly limited, and the adhesion layer 3 can be produced using a known production method. The adhesion layer 3 can be formed by, for example, a sputtering method.

Next, the optical function layer 4 is formed on the hard coat layer 2. As the layers of the optical function layer 4, for example, the first high refractive index layer 41a, the first low refractive index layer 41b, the second high refractive index layer 42a, and the second low refractive index layer 42b are formed on the adhesion layer 3 in that order. The first high refractive index layer 41a, the first low refractive index layer 41b, the second high refractive index layer 42a, and the second low refractive index layer 42b are each formed by using, for example, a sputtering method. Examples of power for the sputtering method include DC (direct current) power, RF (high frequency) power, and MF (medium frequency) power. In a case in which the optical function layer is made of an oxide film, it is not possible to perform sputtering with the DC power, and the productivity is poor with the RF power. For this reason, in a case in which the sputtering is performed for the oxide film, a dual magnetron sputtering device using an MF power is preferable as a sputtering device. The frequency during the sputtering is preferably from 20 KHz to 60 KHz. The degree of vacuum during the sputtering is, for example, 1.0 Pa or less. In addition, in a case in which the optical function layer 4 is formed by a roll-to-roll method, the conveying speed (the line speed) is set to, for example, 0.5 m/min or more and 20 m/min or less. When the optical function layer 4 is formed under such conditions, each layer of the optical function layer 4 becomes dense.

Next, the antifouling layer 5 is formed on the second low refractive index layer 42b of the optical function layer 4. It is preferable to perform plasma treatment on the surface of the optical function layer 4 before the antifouling layer 5 is formed. When the surface of the second low refractive index layer 42 is modified through the plasma treatment, the adhesion between the optical function layer 4 and the antifouling layer 5 is improved. The integrated power during the plasma treatment is preferably 130 W·min/m² or more and 2000 W·min/m² or less. Within this range, the sliding resistance is improved.

The antifouling layer 5 is formed through, for example, vapor deposition. The vapor deposition is performed by heating the material that will become the antifouling layer 5 to a vapor pressure temperature. The degree of vacuum during the vapor deposition is, for example, 1.0 Pa or less. When the antifouling layer 5 is formed under such conditions, the antifouling layer 5 becomes dense and is less likely to be abraded.

The adhesion layer 3, each layer of the optical function layer 4, and the antifouling layer 5 are preferably formed by a roll-to-roll method in a reduced pressure environment. The optical multilayer body 10 can be produced through the above procedure.

In the optical multilayer body 10 according to the first embodiment, the absolute value of the change amount Δb* value in the b* value in the L*a*b* color system before and after sliding is a predetermined value or less. When the change amount Δb* value in the b* value before and after sliding is small, the sliding traces after the sliding test are less likely to be noticeable, although the reason is not clear.

As described above, the present invention is not limited to the above embodiment, and various modifications and changes can be made within the scope of the gist of the present invention described in the scope of claims.

The optical multilayer body 10 may have layers other than the transparent substrate 1, the hard coat layer 2, the adhesion layer 3, the optical function layer 4, and the antifouling layer 5. In addition, the optical multilayer body 10 may have various layers as necessary on a surface of the transparent substrate 1 opposite to a surface of the transparent substrate 1 on which the optical function layer 4 and the like are formed. For example, the optical multilayer body 10 may have an adhesive layer used for adhesion to another member. In addition, another optical film may be bonded to the optical multilayer body 10 via this adhesive layer. Examples of another optical film include a polarizing film, a phase difference compensation film, a film functioning as a half-wavelength plate or a quarter-wavelength plate, and the like.

In addition, a layer having functions such as antireflection, selective reflection, antiglare, polarization, phase difference compensation, viewing angle compensation or expansion, light guide, diffusion, brightness improvement, hue adjustment, and conduction may be formed directly on the opposite surface of the transparent substrate 1. A nano-order uneven structure that exhibits a moth-eye or antiglare function may be formed on the surface of the optical multilayer body 10. A micro to millimeter-order geometry such as a lens or a prism may be formed on the surface of the optical multilayer body 10.

In addition, the optical multilayer body 10 can be applied to various articles. For example, the optical multilayer body 10 may be provided on a screen of an image display unit such as a liquid crystal display panel or an organic EL display panel. As a result, it is possible to provide an image display device that exhibits high scratch resistance for the touch panel display unit of a smartphone or an operating device and is suitable for practical use.

In addition, the article is not limited to the image display device. The optical multilayer body 10 can be applied to a window glass sheet, a goggle, a light receiving surface of a solar cell, a screen of a smartphone or a display of a personal computer, an information input terminal, a tablet terminal, an augmented reality (AR) device, a virtual reality (VR) device, an electronic display board, a glass table surface, a game machine, an operation support device for aircraft, a train, or the like, a navigation system, an instrument panel, an optical sensor surface, and the like.

### [Examples]

### "Example 1"

As a transparent substrate 1, a film made of polyethylene terephthalate (PET) having a thickness of 80 µm was prepared. Then, a hard coat layer 2 having a physical film thickness of 5 µm was formed on the transparent substrate 1. The hard coat layer 2 was formed by a method of applying a coating liquid having a composition shown in Table 1 onto the transparent substrate 1 using a bar coater and irradiating the coating liquid with ultraviolet rays for photopolymerization to cure the coating liquid.

**[Table 1]**

| | Product name | Manufacturer | Structure | Mix proportion |
|---|---|---|---|---|
| Ionizing radiation-curable resin | CN968 | Sartomer | Hexafunctional aliphatic urethane acrylate having polyester skeleton | 8% |
| | SR444 | Sartomer | Pentaerythritol triacrylate | 7% |
| | SR610 | Sartomer | Polyethylene glycol (600) diacrylate (polyethylene glycol chain molecular weight: about 600) | 11% |
| Silica particle | IPA-ST-L | Nissan Chemical Corporation | Silica sol (particle size 40 to 50 nm, solvent IPA, solid component 30%) | 37% |
| Ultraviolet curing initiator | Irgacure 184 | BASF | Hydroxy-cyclohexyl-phenyl-ketone | 2% |
| Solution | PGMA | | Propylene glycol monomethyl ether acetate | 30% |
| | Butyl acetate | | | 5% |
| Total | | | | 100% |
| Levelling agent | BYK377 | BYK | Hydroxyl group-containing polyether modified polydimethylsiloxane | 0.01 parts by weight per above total 100 parts by weight |

Next, an adhesion layer 3 and an optical function layer 4 were successively formed on the hard coat layer 2 by a reactive sputtering method using a Si target and an Nb target as sputtering targets and a mixed gas of Ar gas and O₂ gas.

As the adhesion layer 3, a film of an oxygen-deficient silicon oxide (SiOₓ) was formed with a physical film thickness of 3 nm. As layers of the optical function layer 4, a first high refractive index layer 41a made of Nb₂O₅, a first low refractive index layer 41b made of SiO₂, a second high refractive index layer 42a made of Nb₂O₅, and a second low refractive index layer 42b made of SiO₂ were formed in that order. The physical film thickness and optical film thickness of each layer are shown in Tables 2 and 3. The adhesion layer 3 and the optical function layer 4 were formed by a roll-to-roll method, and the line speed was set to 2.0 m/min. An MF dual magnetron sputtering device was used as the sputtering device, and the frequency was set to 40 KHz.

Next, an antifouling layer 5 made of an alkoxysilane compound having a perfluoropolyether group, which is an organic compound having fluorine (KY-1901, manufactured by Shin-Etsu Chemical Co., Ltd.) was formed on the optical function layer 4 through vapor deposition at a vapor deposition chamber pressure of 0.01 Pa or less, a vapor deposition temperature of 230 °C, and a line speed of 2.0 m/min. The thickness of the antifouling layer 5 was 5 nm. Thereafter, the film was wound into a roll to obtain an optical multilayer body (an anti-reflective film) of Example 1.

The surface roughness Ra, reflectance, and pencil hardness of the produced optical multilayer body were measured. The surface roughness Ra was measured by an atomic force microscope (AFM). These results were summarized in Tables 4 and 5. The reflectance was obtained from the reflection spectrum using a spectrophotometer (V-770 manufactured by JASCO Corporation). The pencil hardness was measured in accordance with JIS K5600-5-4.

A pen sliding test was performed on the surface of the optical multilayer body. The pen sliding test is performed according to the following procedure. First, the optical multilayer body 10 was attached to a glass sheet having a thickness of 1 mm using a transparent adhesive sheet (manufactured by Lintec Corporation) such that the antifouling layer 5 was on a surface. Then, a linear sliding test was performed using a polyacetal pen (having a tip shape of 0.8 mmϕ and a Shore D hardness of 40) and a sliding tester (manufactured by Imoto Manufacturing Co., Ltd.). The load was 250 gf, the number of sliding cycles was 1000 (500 reciprocations), the reciprocation distance was 50 mm, and the speed of reciprocation was two sliding cycles (one reciprocation) per second.

The change in chromaticity of the reflection light before and after the sliding test was obtained as follows. A black PET film with an adhesive was attached to the back surface side of the glass sheet of the pen sliding test sample, and the sample was measured before and after sliding using a USPM-RU-W manufactured by Olympus Corporation. The incidence light was light having a wavelength of 380 nm or more and 780 nm or less, which was emitted from a standard light source D65. The incidence angle of the light was set to 0°. The results are shown in Tables 4 and 5.

In addition, for the obtained optical multilayer body, by changing the incidence angle of light with respect to the surface of the optical multilayer body, the change in chromaticity of the reflection light was obtained. The change in chromaticity of the reflection light was measured using a spectrophotometer (V-770 manufactured by JASCO Corporation) after a surface of the optical multilayer body on a side of the transparent substrate is attached to a surface of a black acrylic panel using a transparent acrylic adhesive. The incidence light was light having a wavelength of 380 nm to 780 nm, which was emitted from a standard light source D65. The measurements were performed at the incidence angles of the light of 5° and 45°. The results are shown in Tables 4 and 5.

### "Examples 2 to 13"

Examples 2 to 13 differ from Example 1 in that at least one of the material of the transparent substrate 1, the thickness of the first high refractive index layer 41a, the thickness of the first low refractive index layer 41b, the thickness of the second high refractive index layer 42a, the thickness of the second low refractive index layer 42b, the material of the first high refractive index layer 41a, the material of the second high refractive index layer 42a, and the film thickness of the antifouling layer 5 is changed. The changes from Example 1 were summarized in Tables 2 and 3. The other conditions were the same as in Example 1, and the same evaluation as in Example 1 was performed. These results were summarized in Tables 4 and 5.

### "Comparative Examples 1 to 4"

Comparative Examples 1 to 4 differ from Example 1 in that at least one of the material of the transparent substrate 1, the thickness of the first high refractive index layer 41a, the thickness of the first low refractive index layer 41b, the thickness of the second high refractive index layer 42a, and the thickness of the second low refractive index layer 42b is changed. The changes from Example 1 were summarized in Tables 2 and 3. The other conditions were the same as in Example 1, and the same evaluation as in Example 1 was performed. These results were summarized in Tables 4 and 5.

**[Table 2]**

| | | Example 1 | Example 2 | Example 3 | Example 4 | Example 5 | Example 6 | Example 7 | Example 8 |
|---|---|---|---|---|---|---|---|---|---|
| Transparent substrate | Material | PET | PET | PET | TAC | PET | PET | PET | TAC |
| Adhesion layer | Physical film thickness (nm) | 3 | 3 | 3 | 3 | 3 | 3 | 3 | 3 |
| First high refractive index layer | Material | Nb₂O₅ | Nb₂O₅ | Nb₂O₅ | Nb₂O₅ | Nb₂O₅ | Nb₂O₅ | Nb₂O₅ | Nb₂O₅ |
| | Physical film thickness (nm) | 17 | 10 | 19 | 17 | 17 | 17 | 17 | 17 |
| | Optical film thickness (nm) | 39.61 | 23.77 | 44.27 | 39.61 | 39.61 | 39.61 | 39.61 | 39.61 |
| First low refractive index layer | Material | SiO₂ | SiO₂ | SiO₂ | SiO₂ | SiO₂ | SiO₂ | SiO₂ | SiO₂ |
| | Physical film thickness (nm) | 8 | 8 | 8 | 4 | 9 | 8 | 8 | 8 |
| | Optical film thickness (nm) | 11.68 | 11.68 | 11.68 | 5.84 | 13.72 | 11.68 | 11.68 | 11.68 |
| Second high refractive index layer | Material | Nb₂O₅ | Nb₂O₅ | Nb₂O₅ | Nb₂O₅ | Nb₂O₅ | Nb₂O₅ | Nb₂O₅ | Nb₂O₅ |
| | Physical film thickness (nm) | 90 | 90 | 90 | 90 | 90 | 79 | 93.5 | 90 |
| | Optical film thickness (nm) | 209.70 | 209.70 | 209.70 | 209.70 | 209.70 | 184.07 | 217.86 | 209.70 |
| Second low refractive index layer | Material | SiO₂ | SiO₂ | SiO₂ | SiO₂ | SiO₂ | SiO₂ | SiO₂ | SiO₂ |
| | Physical film thickness (nm) | 81 | 81 | 81 | 81 | 81 | 81 | 81 | 73 |
| | Optical film thickness (nm) | 118.26 | 118.26 | 118.26 | 118.26 | 118.26 | 118.26 | 118.26 | 106.58 |
| Antifouling layer | Physical film thickness (nm) | 5 | 5 | 5 | 5 | 5 | 5 | 5 | 5 |

**[Table 3]**

| | | Example 9 | Example 10 | Example 11 | Example 12 | Example 13 | Comparative Example 1 | Comparative Example 2 | Comparative Example 3 | Comparative Example 4 |
|---|---|---|---|---|---|---|---|---|---|---|
| Transparent substrate | Material | PET | PET | PET | PET | PET | PET | TAC | PET | PET |
| Adhesion layer | Physical film thickness (nm) | 3 | 3 | 3 | 3 | 3 | 3 | 3 | 3 | 3 |
| First high refractive index layer | Material | Nb₂O₅ | Nb₂O₅ | Nb₂O₅ | TiO₂ | ZnO | Nb₂-O₅ | Nb₂O₅ | Nb₂O₅ | Nb₂O₅ |
| | Physical film thickness (nm) | 17 | 17 | 17 | 17 | 19 | 16 | 10 | 21 | 17 |
| | Optical film thickness (nm) | 39.61 | 39.61 | 39.61 | 42.84 | 39.90 | 37.28 | 23.30 | 48.93 | 39.61 |
| First low refractive index layer | Material | SiO₂ | SiO₂ | SiO₂ | SiO₂ | SiO₂ | SiO₂ | SiO₂ | SiO₂ | SiO₂ |
| | Physical film thickness (nm) | 8 | 8 | 8 | 8 | 8 | 38 | 20 | 8 | 8 |
| | Optical film thickness (nm) | 11.68 | 11.68 | 11.68 | 11.68 | 11.68 | 55.48 | 29.20 | 11.68 | 11.68 |
| Second high refractive index layer | Material | Nb₂O₅ | Nb₂O₅ | Nb₂O₅ | TiO₂ | ZnO | Nb₂O₅ | Nb₂O₅ | Nb₂O₅ | Nb₂O₅ |
| | Physical film thickness (nm) | 90 | 90 | 90 | 90 | 102 | 29 | 110 | 90 | 90 |
| | Optical film thickness (nm) | 209.70 | 209.70 | 209.70 | 226.80 | 214.20 | 67.57 | 256.3 | 209.7 | 209.7 |
| Second low refractive index layer | Material | SiO₂ | SiO₂ | SiO₂ | SiO₂ | SiO₂ | SiO₂ | SiO₂ | SiO₂ | SiO₂ |
| | Physical film thickness (nm) | 85 | 81 | 81 | 81 | 81 | 104 | 84 | 81 | 87 |
| | Optical film thickness (nm) | 124.10 | 118.26 | 118.26 | 118.26 | 118.26 | 151.84 | 122.64 | 118.26 | 127.02 |
| Antifouling layer | Physical film thickness (nm) | 5 | 3 | 10 | 5 | 5 | 5 | 5 | 5 | 5 |

**[Table 4]**

| | | | Example 1 | Example 2 | Example 3 | Example 4 | Example 5 | Example 6 | Example 7 | Example 8 |
|---|---|---|---|---|---|---|---|---|---|---|
| Initial reflectance | | | 0.39 | 0.43 | 0.50 | 0.65 | 0.30 | 0.34 | 0.54 | 0.77 |
| Pencil hardness | | | 2H | 2H | 2H | 2H | 2H | 2H | 2H | 2H |
| Ra (µm) | | | 1.2 | 1.2 | 1.2 | 1.2 | 1.2 | 1.2 | 1.2 | 1.2 |
| Pen sliding test | Initial stage | L* | 3.5 | 4.0 | 4.5 | 5.9 | 2.7 | 3.1 | 4.9 | 6.9 |
| | | a* | -0.6 | 0.3 | -0.1 | -6.1 | 2.2 | 5.8 | -1.5 | -3.1 |
| | | b* | -7.9 | 1.9 | -11.4 | -6.6 | -9.1 | 1.4 | -10.3 | -9.0 |
| | After 1000 cycles at 250 g | L* | 4.1 | 3.4 | 5.4 | 6.2 | 3.5 | 2.8 | 5.9 | 8.5 |
| | | a* | -2.1 | 2.9 | -2.7 | -6.7 | 0.4 | 14.4 | -4.4 | -2.9 |
| | | b* | -7.3 | 0.3 | -9.8 | -8.2 | -7.2 | 1.0 | -8.7 | -9.6 |
| | Determination with eyes | | ⊚ | ○ | ○ | ○ | ○ | ○ | ○ | ⊚ |
| | Δa* | | -1.4 | 2.4 | -2.6 | -0.6 | -1.8 | 2.4 | -2.8 | 0.2 |
| | Δb* | | 0.6 | -1.7 | 1.6 | -1.6 | 1.8 | -0.4 | 1.6 | -0.7 |
| | ΔE*ab | | 1.7 | 2.9 | 3.2 | 1.7 | 2.7 | 2.4 | 3.4 | 1.8 |
| Angular spectroscopy | 5° | L* | 3.5 | 3.9 | 4.5 | 5.9 | 2.7 | 3.1 | 5.0 | 6.9 |
| | | a* | -0.7 | 0.5 | -0.2 | -6.2 | 2.1 | 6.0 | -1.7 | -3.0 |
| | | b* | -7.7 | 1.8 | -11.2 | -6.6 | -8.9 | 1.4 | -10.1 | -9.0 |
| | 45° | L* | 10.9 | 10.2 | 12.2 | 11.1 | 11.1 | 11.3 | 12.4 | 15.2 |
| | | a* | 4.7 | 18.0 | 0.6 | 4.9 | 4.8 | 19.5 | -1.2 | 9.4 |
| | | b* | -7.6 | -3.7 | -7.8 | -12.5 | -4.9 | 2.4 | -7.8 | -11.7 |
| | Δa* | | 5.4 | 17.5 | 0.8 | 11.1 | 2.7 | 13.5 | 0.5 | 12.4 |
| | Δb* | | 0.1 | -5.5 | 3.5 | -5.9 | 4.0 | 1.0 | 2.3 | -2.7 |
| | ΔE*ab | | 9.2 | 19.4 | 8.5 | 13.6 | 9.6 | 15.8 | 7.8 | 15.2 |
| | Overall evaluation | | ⊚ | ○ | ⊚ | ○ | ⊚ | ○ | ⊚ | ○ |

**[Table 5]**

| | | | Example 9 | Example 10 | Example 11 | Example 12 | Example 13 | Comparative Example 1 | Comparative Example 2 | Comparative Example 3 | Comparative Example 4 |
|---|---|---|---|---|---|---|---|---|---|---|---|
| Initial reflectance | | | 0.35 | 0.42 | 0.35 | 0.40 | 0.68 | 0.23 | 0.09 | 0.48 | 0.35 |
| Pencil hardness | | | 2H | 2H | 2H | 2H | 2H | 2H | 2H | 2H | 2H |
| Ra (µm) | | | 1.2 | 1.2 | 1.2 | 1.2 | 1.2 | 1.2 | 1.2 | 1.2 | 1.2 |
| Pen sliding test | Initial stage | L* | 3.2 | 3.8 | 3.1 | 3.6 | 6.1 | 2.1 | 1.9 | 5.9 | 3.4 |
| | | a* | 2.8 | -1.5 | 2.5 | -0.7 | -8.5 | 4.6 | 2.2 | 0.9 | 5.0 |
| | | b* | -10.5 | -7.4 | -10.2 | -8.3 | 6.1 | -8.6 | -5.2 | -14.0 | -12.4 |
| | After 1000 cycles at 250 g | L* | 3.3 | 4.4 | 3.3 | 4.3 | 6.8 | 2.2 | 2.7 | 7.3 | 3.2 |
| | | a* | 0.6 | -2.5 | 0.2 | -2.4 | -9.7 | 4.7 | -0.1 | -2.9 | 2.5 |
| | | b* | -8.6 | -7.3 | -8.4 | -7.6 | 7.4 | -5.0 | -1.4 | -11.3 | -10.2 |
| | Determination with eyes | | ○ | ⊚ | ○ | ⊚ | ○ | × | × | × | × |
| | Δa* | | -2.2 | -1.0 | -2.3 | -1.6 | -1.1 | 0.1 | -2.4 | -3.7 | -2.6 |
| | Δb* | | 1.9 | 0.1 | 1.8 | 0.6 | 1.3 | 3.6 | 3.7 | 2.7 | 2.2 |
| | ΔE*ab | | 2.8 | 1.1 | 2.8 | 1.8 | 1.9 | 3.6 | 4.4 | 4.7 | 3.3 |
| Angular spectroscopy | 5° | L* | 3.2 | 3.8 | 3.1 | 3.6 | 6.1 | 2.1 | 2.0 | 6.0 | 3.4 |
| | | a* | 2.6 | -1.6 | 2.3 | -0.8 | -8.6 | 4.6 | 2.1 | 0.6 | 4.8 |
| | | b* | -10.2 | -7.3 | -10.0 | -8.1 | 6.1 | -8.3 | -4.9 | -13.7 | -12.1 |
| | 45° | L* | 9.3 | 11.6 | 9.5 | 11.2 | 12.5 | 10.6 | 11.2 | 13.7 | 8.7 |
| | | a* | 1.9 | 5.5 | 2.8 | 4.2 | -3.6 | 8.5 | -4.5 | -2.9 | 0.5 |
| | | b* | -5.1 | -8.2 | -5.9 | -7.6 | 0.7 | 7.5 | 2.5 | -7.7 | -3.9 |
| | Δa* | | -0.7 | 7.1 | 0.6 | 5.1 | 5.0 | 3.9 | -6.6 | -3.5 | -4.3 |
| | Δb* | | 5.1 | -0.9 | 4.1 | 0.5 | -5.4 | 15.7 | 7.4 | 6.1 | 8.2 |
| | ΔE*ab | | 8.0 | 10.5 | 7.7 | 9.1 | 9.8 | 18.3 | 13.5 | 10.4 | 10.7 |
| | Overall evaluation | | ⊚ | ⊚ | ○ | ⊚ | ⊚ | × | × | × | × |

The determination with the eyes in the pen sliding test was made as follows. In a case in which there was almost no change in color of the reflection light, it was marked as "⊚." In a case in which there was a slight change in color of the reflection light, it was marked as "○." In a case in which there was a significant change in color of the reflection light or a part of the optical function layer 4 was peeled off, it was marked as "×."

The determination in the angular spectroscopy was performed as follows, and an overall evaluation was made. In a case in which the absolute value of the Δb* value was 6 or less, it was marked as "○." In a case in which the absolute value of the Δb* value was 6 or less and the absolute value of the Δa* value was 10 or less, it was marked as "⊚." In a case in which the |b*| value was 6 or more, it was marked as "×."

### REFERENCE SIGNS LIST

1 Transparent substrate
2 Hard coat layer
3 Adhesion layer
4 Optical function layer
41a First high refractive index layer
41b First low refractive index layer
42a Second high refractive index layer
42b Second low refractive index layer
5 Antifouling layer
10 Optical multilayer body

## Claims

1. An optical multilayer body,
wherein a transparent substrate, a hard coat layer, an adhesion layer, an optical function layer, and an antifouling layer are stacked in that order, and
wherein, when the optical multilayer body is subjected to a sliding test of 500 reciprocations at a load of 250 g using a sliding tool having a Shore D hardness of 40 and a diameter of 0.8 mm, an absolute value of a change amount Δb* in a b* value in an L*a*b* color system before and after sliding at a sliding portion is 1.9 or less.

2. The optical multilayer body according to claim 1,
wherein the optical function layer includes a first high refractive index layer, a first low refractive index layer, a second high refractive index layer, and a second low refractive index layer in order from a side closer to the adhesion layer,
wherein the first high refractive index layer and the second high refractive index layer have higher refractive indices than the first low refractive index layer and the second low refractive index layer, respectively,
wherein a physical film thickness of the first high refractive index layer is 10 nm or more and 20 nm or less,
wherein a physical film thickness of the first low refractive index layer is 2 nm or more and 15 nm or less, and
wherein a physical film thickness of the second low refractive index layer is 70 nm or more and 85 nm or less.

3. The optical multilayer body according to claim 1,
wherein the optical function layer includes a first high refractive index layer, a first low refractive index layer, a second high refractive index layer, and a second low refractive index layer in order from a side closer to the adhesion layer,
wherein the first high refractive index layer and the second high refractive index layer have higher refractive indices than the first low refractive index layer and the second low refractive index layer, respectively,
wherein an optical film thickness of the first high refractive index layer is 20 nm or more and 48.8 nm or less,
wherein an optical film thickness of the first low refractive index layer is 2.9 nm or more and 21.9 nm or less, and
wherein an optical film thickness of the second low refractive index layer is 102 nm or more and 124.1 nm or less.

4. The optical multilayer body according to claim 1, wherein a total physical film thickness of the optical function layer is 170 nm or more and 220 nm or less.

5. The optical multilayer body according to claim 1, wherein a total optical film thickness of the optical function layer is 320 nm or more and 410 nm or less.

6. The optical multilayer body according to claim 1, wherein a physical film thickness of the antifouling layer is 2 nm or more and 10 nm or less.

7. The optical multilayer body according to claim 1, wherein the optical function layer is a sputtered film.

8. The optical multilayer body according to claim 1, wherein the antifouling layer is a vapor-deposited film.

9. The optical multilayer body according to claim 1, wherein the antifouling layer contains a fluorine-based compound.

10. An article comprising the optical multilayer body according to any one of claims 1 to 9.
